# EUROPÄISCHE PATENTSCHRIFT

(11) **EP 2 442 907 B1**
(45) Veröffentlichungstag und Bekanntmachung des Hinweises auf die Patenterteilung: **09.05.2018**
(21) Anmeldenummer: 10726437.6
(22) Anmeldetag: 18.06.2010
(51) Int. Cl.: B01J 49/00

(54) **VERFAHREN ZUM ENTFERNEN VON IONEN AUS EINER FLÜSSIGKEIT**
METHOD FOR REMOVING IONS FROM A LIQUID
PROCÉDÉ POUR ÉLIMINER DES IONS D'UN LIQUIDE

(30) Priorität: 18.06.2009 DE 102009025460; 25.02.2010 DE 102010009252
(43) Veröffentlichungstag der Anmeldung: 25.04.2012
(73) Patentinhaber: Roiner, Franz, 94372 Rattiszell (DE); Roiner, Maria, 94372 Rattiszell (DE); Gensch, Henning, 30657 Hannover (DE); Gensch, Barbara, 30657 Hannover (DE)
(72) Erfinder: Roiner, Franz, 94372 Rattiszell (DE); Roiner, Maria, 94372 Rattiszell (DE); Gensch, Henning, 30657 Hannover (DE); Gensch, Barbara, 30657 Hannover (DE)
(74) Vertreter: Zinnecker, Armin
(86) Internationale Anmeldenummer: PCT/EP2010/003684
(87) Internationale Veröffentlichungsnummer: WO 2010/145834

(56) Entgegenhaltungen:
- EP-A1- 1 790 413
- DATABASE WPI Week 197911 Thomson Scientific, London, GB; AN 1979-20860B XP002619073, & JP 54 016377 A (HITACHI LTD) 6. Februar 1979 (1979-02-06)

## Beschreibung

Die vorliegende Erfindung betrifft ein Verfahren zum Entfernen von Ionen aus einer Flüssigkeit.

Verfahren zum Entfernen von Elektrolyten aus einem Lösungsmittel, beispielsweise zur Entionisierung von Wasser oder zur Abwasserreinigung, sind im Stand der Technik bekannt.

So offenbart beispielsweise die US 2,812,300 ein Verfahren, wobei elektrolythaltiges Wasser in Serie über einen Kationenaustauscher und einen Anionenaustauscher geleitet wird. Dadurch werden dem Wasser Elektrolyte entzogen. Die die Ionenaustauscher enthaltenden Kompartimente stehen über eine ionendurchlässige Membran mit einer Reinigungsflüssigkeit, beispielsweise reinem Wasser, in Verbindung. Die Regeneration der mit den Ionen aus dem elektrolythaltigen Wasser beladenen Ionenaustauscher erfolgt elektrolytisch, wobei zur Regeneration des Kationenaustauschers eine Anode und zur Regeneration des Anionenaustauschers eine Kathode in den jeweiligen Kompartimenten angeordnet ist. Der Prozess erfolgt diskontinuierlich. In einem ersten Schritt werden die Ionenaustauscher mit Ionen beladen und das elektrolythaltige Wasser abgereichert. In einem zweiten Schritt wird der Fluss an elektrolythaltigem Wasser durch den Ionenaustauscher unterbrochen und die elektrolytische Regeneration durch Anlegen einer Spannung an den Elektroden eingesetzt. Dabei wird Wasser elektrolysiert. Die an der Anode entstehenden Protonen verdrängen die am Kationenaustauscher assoziierten Kationen, und die an der Kathode entstehenden Hydroxidionen verdrängen die am Anionenaustauscher asoziierten Anionen Die aus dem Ionenaustauscher frei werdenden Ionen durchdringen die ionendurchlässige Membran und werden von der Reinigungsflüssigkeit aufgenommen und abtransportiert. Nach der Regeneration des Ionentauschers beginnt der Prozess von neuem.

In der DE 42 44 060 wird das Verfahren der US 2,812,300 so modifiziert, dass Entsalzung und Regeneration gleichzeitig ablaufen können und damit eine kontinuierlicher Entsalzung ermöglicht wird. Die DE 42 44 060 erreicht dabei durch geeignete Modifikation der Apparatur und Einstellung der Betriebsparameter ein Gleichgewicht zwischen dem Beladungsgrad des lonenaustauscherbettes, dem Durchsatz durch die ionendurchlässige Membran und dem Abreicherungsgrad durch die Spülflüssigkeit, sodass ein kontinuierlicher Betrieb ermöglicht wird. Ein weiteres gattungsgemäßes Verfahren zum kontinuierlichen Betrieb ist aus der DE 44 18 812 A1 bekannt. Dabei wird der stationäre Beladungszustand des Harzes durch Variation der angelegten Stromrichtung kontrolliert.

Aus der EP 1 790 413 A1 ist ein Verfahren zum Entfernen von Ionen aus einer Flüssigkeit bekannt, nämlich ein Wasseraufbereitungsverfahren, bei dem ein Ionenaustauscher von Wasser durchströmt wird, wobei der Ionenaustauscher mit Ionen beladen wird und der Flüssigkeit Ionen entzogen werden. In einer ersten Betriebsphase werden alle Kationen gegen Wasserstoff ausgetauscht. Wenn die Tauschersäule ans Ende ihrer Austauschkapazität gelangt ist, ist eine Regeneration erforderlich, die in einer zweiten Betriebsphase durchgeführt wird. Zur Regeneration wird eine Spannung an eine Kathode und eine Anode angelegt. Das durch die Tauschersäule fließende Wasser dient als Elektrolyt zwischen Anode und Kathode. Wird Strom durch das Wasser geleitet, bildet sich molekularer Wasserstoff in Form von Wasserstoffbläschen.

Die aus dem Stand der Technik bekannten, gattungsgemäßen Entionisierungsanlagen weisen jedoch einen relativ komplizierten Zellaufbau auf und erfordern die permanente Kontrolle einzelner Betriebsparameter, wenn ein kontinuierlicher Entsalzungsbetrieb erfolgen soll. Zudem fällt eine erhebliche Menge an mit den entfernten Ionen versetztem Spülmittel an, was insbesondere bei der Abreicherung von giftigen Ionen, Schwermetallionen, radioaktiven Ionen und anderweitig schädlichen Ionen vermieden werden soll.

Aufgabe der Erfindung ist es, ein Verfahren zur Entionisierung einer Flüssigkeit bereitzustellen, welches besonders einfach durchzuführen ist und wobei die Menge an anfallendem Abwasser maßgeblich reduziert werden kann.

Diese Aufgabe wird durch ein Verfahren mit den Merkmalen des Anspruchs 1 gelöst. Vorteilhafte Ausgestaltungen ergeben sich aus den Unteransprüchen.

Demnach ist ein Verfahren zum Entfernen von Ionen aus einer Flüssigkeit vorgesehen, wobei in einem ersten Schritt mindestens ein Ionenaustauscher von der zu entionisierenden Flüssigkeit durchströmt wird und in einem zweiten Schritt der Ionenaustauscher elektrolytisch regeneriert wird. Beim Durchströmen des Ionenaustauschers mit der Flüssigkeit wird der Ionenaustauscher in einer Beladungszone mit den zu entfernenden Ionen beladen, wobei die Flüssigkeit entionisiert beziehungsweise abgereichert wird. Die elektrolytische Regeneration des Ionenaustauschers in einer Regenerationszone umfasst die Substitution und den Abtransport der im Reinigungsschritt an den Ionenaustauscher assoziierten Ionen. Erfindungsgemäß ist vorgesehen, dass die bei der Regeneration des Ionenaustauschers freiwerdenden Ionen mit den bei der Elektrolyse gebildeten Gasen abgeführt werden.

Erfingsgemäß ist vorgesehen, dass sich die Phasen der Beladung und der Regeneration des Ionenaustauschers zeitlich zumindest teilweise und vorzugsweise vollständig überschneiden. Weiterhin ist vorgesehen, dass sich die Beladungszone und die Regenerationszone in räumlicher Hinsicht überschneiden oder entsprechen.

Es handelt sich um ein kontinuierliches Verfahren, wobei die Möglichkeit besteht, kontinuierlich Flüssigkeit in eine Vorrichtung zur Durchführung des erfindungsgemäßen Verfahrens einzuleiten und Ionen aus dieser Flüssigkeit zu entfernen, insbesondere die Flüssigkeit zu entsalzen, und dabei kontinuierlich oder in Intervallen den Ionenaustauscher während der Entfernung der Ionen bzw. Entsalzung zu regenerieren. Gegenüber vorbekannten gattungsgemäßen Verfahren kann dabei auf eine komplizierte Kontrolle von Prozessparametern, um einen kontinuierlichen Betrieb zu ermöglichen, verzichtet werden.

In einer Ausführungsform erfolgt die Regeneration des Ionenaustauschers permanent und in einer anderen Ausführungsform in Intervallen.

Es hat sich überraschend gezeigt, dass in einem gattungsgemäßen Verfahren während der elektrolytischen Regeneration des Ionenaustauschers die an dem Ionenaustauscher assoziierten, unerwünschten Ionen nicht wie im Stand der Technik bekannt nach dem Durchlaufen einer ionendurchlässigen Membran durch eine Spülflüssigkeit aktiv aus der Beladungs- und Regenerationszone entfernt werden müssen, sondern dass diese mit den bei der Elektrolyse entstehenden Gasen abgeführt werden. Vorteilhaft ist es, wenn der Ionenaustauscher und/oder die Elektroden derart angeordnet sind, daß ein Abführen der unerwünschten Ionen mit den bei der Elektrolyse entstehenden Gasen begünstigt oder ermöglicht wird.

Ein weiterer Vorteil, der in bestimmten Fällen mit der Erfindung erreicht werden kann, ist die Herstellung von Gasen in Verbindung mit der Möglichkeit, Ionen organischer oder anorganischer Spezies aus einer ionenhaltigen Flüssigkeit auszutragen.

Es ist möglich, dass die Ionen im Gas an der darin vorhandenen Restfeuchtigkeit anhaften, dass die Ionen als gasförmige Ionen abgeführt werden und/oder dass die Ionen sich zu Schwebeteilchen akkumulieren oder an Schwebeteilchen anlagern.

Dadurch kann auf einen komplizierten Zellenaufbau mit einer oder mehreren ionendurchlässigen Membranen sowie auf eine direkt mir der Zelle in Kontakt stehende Spülflüssigkeit verzichtet werden. Ferner fällt keine mit den entfernten Ionen angereicherte Spülflüssigkeit an, was insbesondere bei der Abwasserreinigung und bei der Entfernung von giftigen Ionen, radioaktiven Ionen, Schwermetallionen, Wasserorganismen schädigenden Ionen und anderweitig schädlichen Ionen wünschenswert ist.

Vorteilhafte Weiterbildungen sind in den Unteransprüchen beschrieben.

In einer bevorzugten Ausführungsform der Erfindung ist vorgesehen, dass zum Abtransport der bei der Regeneration des Ionenaustauschers freiwerdenden Ionen keine Spülflüssigkeit verwendet wird. Auf die unmittelbar, das heißt über eine ionenpermeable Membran mit der Regenerationszone in Verbindung stehende Spülflüssigkeit kann verzichtet werden, da die bei der Regeneration des Ionenaustauschers frei werdenden Ionen mit den bei der Elektrolyse gebildeten Gasen abgeführt werden und somit ein anders gearteter Abtransport nicht notwendig ist.

In einer weiteren bevorzugten Ausführungsform ist vorgesehen, dass die bei der Regeneration des Ionenaustauschers frei werdenden Ionen bei deren Abtransport aus der Regenerationszone keine ionendurchlässige Trennwand durchdringen. Auf die zumindest einen Teil der Regenerationszone bewandende ionenpermeable Membran kann verzichtet werden, da die bei der Regeneration des Ionenaustauschers frei werdenden Ionen mit den bei der Elektrolyse gebildeten Gasen abgeführt werden und somit der Abtransport durch Diffusion nicht mehr notwendig ist.

In einer Ausführungsform handelt sich bei der zu dekontaminierenden Flüssigkeit um Wasser, und weiter vorzugsweise um Abwasser. In einer weiteren Ausführungsform ist das erfindungsgemäße Verfahren ein Verfahren zur Abwasserreinigung, vorzugsweise zur Entfernung von schädlichen und/oder unerwünschten Metallionen aus industriellen Abwässern. Dabei kann es sich beispielsweise um radioaktive Ionen, Schwermetallionen und/oder andere schädliche Ionen wie Silber, Cadmium oder Kupferionen handeln. Generell sind jedoch alle an Ionenaustauscher bindenden anorganischen und/oder organischen Kationen und/oder Anionen umfasst, beispielsweise Kalium, Natrium, Magnesium, Schwefel, Fluorid, Chlorid, Bromid, lodid, Nitrat, Sulfat und einfache oder komplexe Ionen der Nebengruppenelemente.

In einer Ausführungsform wird zwischen der Kathode und der Anode vorzugsweise eine Betriebsspannung von zwischen 1,2 V und 2 V angelegt. Das Verfahren kann aber auch jenseits dieses Spannungsbereiches, beispielweise bei zwischen 2 V und 4 V oder bei Spannungen von bis zu 12 V erfolgreich durchgeführt werden.

In einer Ausführungsform entsteht unter Verwendung von Wasser oder wasserbasierten Flüssigkeiten als zu entionisierende Flüssigkeit und der Wahl eines geeigneten Spannungsbereichs an der Anode elementarer Sauerstoff und an der Kathode elementarer Wasserstoff. Daneben können aber auch andere Bestandteile wie verschiedene Schwebeteilchen beziehnungsweise gelöste Ionen im Wasser elektrolysiert werden, und es können zusätzlich weitere Gase wie beispielsweise Chlorgas oder Kohlendioxid entstehen. Vorzugsweise werden bei der Regeneration des Kationenaustauschers frei werdende Kationen vornehmlich oder ausschließlich mit dem an der Anode entstehenden Sauerstoff abgeführt und/oder die bei der Regeneration des Anionenaustauschers frei werdenden Anionen hauptsächlich oder ausschließlich mit dem an der Kathode entstehenden Wasserstoff abgeführt. Die Regeneration des Ionenaustauschers erfolgt in diesem Fall durch Substitution der assoziierten Ionen mit an der Anode gebildeten Protonen im Falle des Kationenaustauschers und mit an der Kathode gebildeten Hydroxidionen im Falle des Anionenaustauschers.

In einer bevorzugten Ausführungsform handelt es sich bei dem Ionenaustauscher um ein partikuläres lonenaustauschermaterial beziehungsweise ein gegebenenfalls partikuläres lonenaustauscherharz. Der Ionenaustauscher kann dabei in Gelform vorliegen. Beispiele für geeignete Ionenaustauscher umfassen als Kationenaustauscher solche mit stark sauren funktionellen Gruppen wie Sulfonsäuregruppen oder schwach sauren funktionellen Gruppen wie Carboxygruppen, und als Anionenaustauscher solche mit stark basischen Gruppen wie quaternären Ammoniumgruppen oder mit schwach basischen Gruppen wie Aminogruppen.

In einer bevorzugten Ausführungsform wird die zu eintionisierende Flüssigkeit mit mindestens zwei Arten von Ionenaustauschern kontaktiert, wobei vorzugsweise mindestens einer der Ionenaustauscher sauer, d.h. ein Kationenaustauscher, und einer der Ionenaustauscher basisch, d.h. ein Anionenaustauscher ist. Besonders bevorzugt ist dabei, dass der Kontakt mit den Ionenaustauschern in Serie, das heißt nacheinander erfolgt.

In einer Ausführungsform ist vorgesehen, dass einzelne Ionenaustauscher, einzelne Arten von Ionenaustauschern und/oder in getrennten Behältern oder Kompartimenten vorliegende Ionenaustauscher gemeinsam oder getrennt regeneriert werden.

Der Ionenaustauscher liegt dabei vorzugsweise stationär in einem Behälter beziehungsweise einem Kompartiment vor und die Flüssigkeit wird durch diesen Behälter geleitet.

In einer bevorzugten Ausführungsform liegt der Ionenaustauscher als partikuläres lonenaustauschermaterial in einer Zone vor, die von einer Flüssigkeit durchströmt wird. Die betreffende Zone ist gleichzeitig Beladungs- und Regenerationszone. Vorzugsweise wird dabei die Strömungsrichtung der Flüssigkeit so gewählt, dass das partikuläre lonenaustauschermaterial während der Durchströmung beziehungsweise durch die Durchströmung gepackt wird. Dies steht im Gegensatz zu einem Wirbelschichtverfahren, wobei ein partikuläres Material durch ein einströmendes Fluid aufgelockert wird und so die Wirkungsfläche zwischen der partikulären Oberfläche und dem Fluid erhöht wird. So kann es beispielsweise vorgesehen sein, dass die zu entionisierende Flüssigkeit von oben in den das partikuläre Ionenaustauschermaterial enthaltenden Behälter beziehungsweise in das das partikuläre lonenaustauschermaterial enthaltende Kompartiment einströmt, und an dessen Unterseite die erfindungsgemäße Vorrichtung wieder verlässt. Die Flussrichtung folgt somit der Schwerkraft und der natürlichen Setzungsrichtung der Teilchen. Gegebenenfalls werden dabei Teile der Elektroden oder die kompletten Elektroden von dem gepackten Ionenaustauscher fest umschlossen.

Unter Verwendung einer derartigen Anordnung konnte überraschend eine verbesserte Funktion eines erfindungsgemäßen Verfahrens festgestellt werden, insbesondere hinsichtlich des Abtransportes der Ionen mit dem abgeführten Gas. Dies kann darauf zurückzuführen sein, dass die Abscheidung der Ionen an den Elektroden verringert oder vermieden wird. Es kann ferner sein, dass der Stromfluss in dieser Anordnung bei der Gasbildung ein Mitreißen der abgelösten Ionen bewirkt, die anschließend mit den gebildeten Gasen abgeführt werden können.

Mit dem erfindungsgemäßen Verfahren kann für die entionisierte Flüssigkeit, insbesondere für das gereinigte Abwasser, eine elektrische Leitfähigkeit von weniger als 20 µS, vorzugsweise weniger als 18 µS erreicht werden.

In einer weiteren Ausführungsform weist ein erfindungsgemäßes Verfahren einen zusätzlichen Schritt auf, wobei die abgeführten Ionen aus den bei der Elektrolyse entstehenden Gasen nach deren Entweichen aus der Regenerationszone entfernt werden. Die Gase werden dabei vorzugsweise individuell oder kumulativ aus der Regenerationszone abgeleitet und/oder abgesaugt und anschließend behandelt. Beispiele für zweckmäßige Behandlungsmethoden umfassen die Gasfiltration oder das Leiten der Gase durch ein Spannungsfeld.

Besonders bevorzugt ist das Einleiten des oder der Gase in ein sekundäres Medium, beispielsweise eine Reinigungsflüssigkeit. Diese enthält gegebenenfalls Stoffe, die die abgeführten Ionen in dem sekundären Medium zurückhalten können. Beispiele sind Fällungsreagentien wie beispielsweise Sulfide, Halogenide, Carbonate und andere Anionen, die vorzugsweise schwerlösliche Salze bilden. Geeignete Fällungsreagentien zur Fällung von Anionen sind beispielsweise Magnesium, Aluminium, Blei oder die Ionen von Nebengruppenelementen. Andere geeignete Fällungsreagentien umfassen Komplexbildner oder Stoffe wie unter anderem Proteine und andere organische Verbindungen, die bestimmte Ionen binden bzw. assoziieren können.

Das mit den Gasen versetzte sekundäre Medium kann ferner dazu dienen, die abgeführten Ionen einer nützlichen Verwendung zuzuführen. Dabei sei die Gewinnung bestimmter Salze durch Ausfällung oder Abdampfen erwähnt.

In einer weiteren Ausführungsform weist ein erfindungsgemäßes Verfahren einen zusätzlichen Schritt auf, wobei die bei der Elektrolyse entstehenden Gase genützt werden. So können unter anderem Wasserstoff und/oder Sauerstoff, vorzugsweise nachdem sie von den abgeführten Ionen befreit wurden, in Flaschen abgefüllt und einer beliebigen aus dem Stand der Technik bekannten Verwendung zugeführt werden.

Ferner ist es möglich, diese Gase zur Energiegewinnung zu verwenden, beispielsweise durch Verbrennung von Wasserstoff, einer kontrollierten Knallgasreaktion oder bevorzugt zur direkten Stromerzeugung in einer Brennstoffzelle. Besonders bevorzugt ist dabei, dass ein Teil der Energie, welche unter Verwendung der bei der Elektrolyse entstehenden Gase gewonnen wird, wiederum für die elektrolytische Regeneration der Ionenaustauscher eingesetzt wird. So kann beispielsweise mit dem entstehenden Wasserstoff eine Brennstoffzelle betrieben werden und der dabei generierte Strom kann beim Betrieb der Elektrolysezelle eingespeist werden. Es hat sich in diesem Zusammenhang überraschend herausgestellt, dass der Wirkungsgrad der Gaserzeugung in einem erfindungsgemäßen Verfahren außergewöhnlich hoch ist, wodurch die Verwertung der abgeführten Gase einen maßgeblichen Beitrag zu der Versorgung der Elektrolysezelle leisten können.

Das erfindungsgemäße Verfahren kann in einer Vorrichtung zum Entfernen von Ionen aus einer Flüssigkeit mit mindestens einem Behälter durchgeführt werden, wobei der Behälter mindestens eine Zuleitung und mindestens eine Ableitung für die Flüssigkeit aufweist und mit mindestens einer Art von lonenaustauschermaterial befüllt ist. Der Behälter weist Elektroden zur elektrolytischen Regeneration des Ionenaustauschers auf. Ferner sind Mittel zur vorzugsweise geregelten und/oder vorzugsweise vollständigen Ableitung der bei der Elektrolyse entstehenden Gase vorhanden.

In einer Ausführungsform handelt es sich bei der zu reinigenden Flüssigkeit um Wasser. Dann kann ein separater oder gemeinsamer Abzug und Sammelmechanismus für Wasserstoffgas und Sauerstoffgas vorgesehen sein.

In einer Ausführungsform ist vorgesehen, dass der oder die Behälter der Vorrichtung keine Zuleitung und/oder Ableitung für eine Spülflüssigkeit aufweisen. In einer anderen bevorzugten Ausführungsform ist vorgesehen, dass der oder die Behälter keine ionendurchlässige Trennwand enthalten oder aufweisen.

Ferner kann vorgesehen sein, dass der Ionenaustauscher in dem oder den Behältern als partikuläres lonenaustauschermaterial vorliegt und die Zuleitung und die Ableitung für die Flüssigkeit vorzugsweise so angeordnet sind, dass durch die Strömungsrichtung ein Zusammenpacken des partikulären Ionenaustauschmaterials begünstigt wird. Dabei kann vorgesehen sein, dass die Elektroden teilweise oder vollständig von dem partikulären lonenaustauschermaterial gepackt umgeben sind.

In einer Ausführungsform weist die Vorrichtung ferner Mittel zum Entfernen von Ionen und/oder Schwebeteilchen aus dem abgeleiteten Gas auf. Vorzugsweise umfassen diese Mittel einen weiteren Behälter befüllt mit oder aufweisend ein sekundäres Reinigungsmedium sowie eine Zuleitung für Gase aus dem Behälter einer erfindungsgemäßen Vorrichtung. Die Zuleitung soll dabei vorzugsweise so angeordnet sein, dass die Gase das sekundäre Reinigungsmedium durchströmen.

In einer Ausführungsform weist die Vorrichtung ferner Mittel zum Verbrennen mindestens eines der bei der Elektrolyse entstehenden Gase auf. In einer anderen Ausführungsform weist die Vorrichtung Mittel zum Abfüllen oder Sammeln wenigstens eines bei der Elektrolyse entstehenden Gase auf.

In einer bevorzugten Ausführungsform ist vorgesehen, dass die Vorrichtung Mittel zur Energiegewinnung, vorzugsweise Stromerzeugung aus dem oder den bei der Elektrolyse entstehenden Gasen aufweist. Diese Mittel zur Energiegewinnung sind vorzugsweise funktionell mit den Elektroden des Behälters beziehungsweise mit deren Versorgerkreislauf verbunden.

In einer Ausführungsform weist die Vorrichtung mindestens zwei und gegebenenfalls genau zwei Kompartimente und/oder Behälter auf, die jeweils mit mindestens einem und vorzugsweise genau einem Ionenaustauscher befüllt sind. Vorzugsweise ist dabei vorgesehen, dass ein Behälter und/oder Kompartiment mit einem Kationenaustauscher und ein zweiter Behälter und/oder Kompartiment mit einem Anionenaustauscher befüllt ist beziehungsweise einen solchen aufweist. Gegebenenfalls sind mindestens oder genau zwei Behälter oder Kompartimente in Serie geschaltet.

In einer weiteren Ausführungsform ist vorgesehen, dass der oder die Behälter und/oder das oder die Kompartimente der Vorrichtung an deren Innenseite und/oder in deren Innenraum eine oder mehrere Elektroden aufweisen. Die an der Behälter- und/oder Kompartimentinnenwand sitzenden Elektroden erstrecken sich gegebenenfalls über Teile der Behälterinnenwand oder über die gesamte Behälterinnenwand.

Weitere Einzelheiten und Vorteile der vorliegenden Erfindung ergeben sich aus den folgenden Ausführungsbeispielen. In den Figuren zeigen
- Fig. 1: eine schematische Ansicht einer Vorrichtung zur Durchführung des erfindungsgemäßen Verfahrens und
- Fig. 2: eine schematische Darstellung eines erfindungsgemäßen Verfahrens als Flussdiagramm.

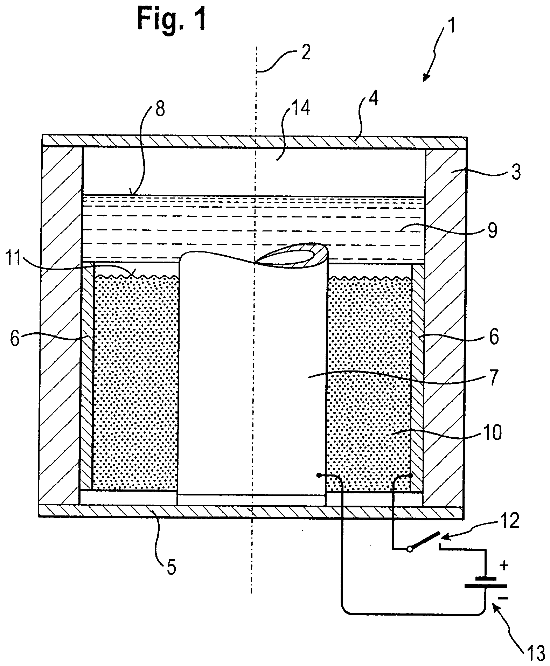

Die in Figur 1 gezeigte Vorrichtung umfasst einen Behälter 1, der um die Mittelachse 2 rotationssymetrisch ausgestaltet ist und der aus einem rohrförmigen Gehäuse 3 besteht, das durch einen oberen Deckel 4 und einen unteren Deckel 5 abgeschlossen ist. Die Vorrichtung ist vorzugsweise länger als dargestellt ausgeführt.

An der Innenwand des Gehäuses 3 befindet sich eine ringförmige äußere Elektrode 6. Im Inneren des Gehäuses 3 befindet sich eine rohrförmige innere Elektrode 7. Der Behälter 1 ist bis zum Spiegel 8 mit elektrolythaltigem Wasser 9 gefüllt, welches vorzugsweise von oben in den Behälter eingefüllt wird. Der Flüssigkeitsspiegel kann auch bis zum Deckel 4 reichen, wodurch der Behälter 1 vollständig gefüllt wäre. Weiter ist denkbar, dass das Wasser mit Druck in den Behälter eingebracht wird.

Zwischen den Elektroden 6 und 7 ist partikuläres lonenaustauscherharz 10 vorhanden, welches bis zur Höhe 11 gelförmig vorliegt. Abweichend von der Zeichnung kann die Vorrichtung vorzugsweise derart ausgestaltet sein, dass die Höhe 11 am oder über dem oberen Ende der Elektrode 6 liegt. Durch den von oben nach unten gerichteten Strom der Flüssigkeit wird der partikuläre Ionenaustauscher komprimiert und umgibt die Elektroden 6 und 7 fest gepackt. Hierdurch erfolgt während der Elektrolyse keine Abscheidung direkt an den Elektroden, sondern die an den Ionenaustauschern in lonenbindung befindlichen Ionen werden mit den während der Elektrolyse gebildeten Wasserstoff- und Sauerstoffgasen abgeführt.

Die äußere Elektrode 6 ist in dem Ausführungsbeispiel über den Schalter 12 mit dem Pluspol einer Stromquelle 13 verbunden und dient während dem Elektrolysevorgang durch die Aufnahme von Elektronen des Wassers als Anode. Die innere Elektrode ist mit dem Minuspol der Stromquelle 13 verbunden und dient während dem Elektrolysevorgang durch Elektronenabgabe an das Wasser als Kathode. An der Anode entsteht während der Elektrolyse Sauerstoffgas, und an der Kathode Wasserstoffgas.

Die Gaserzeugung wird durch das Vorhandensein des Ionenaustauschers 10 begünstigt. Sauerstoff- und Wasserstoffgas können getrennt oder gemeinsam aus dem Raum 14 diskontinuierlich oder kontinuierlich abgezogen bzw. abgesaugt werden (in der Zeichnung nicht dargestellt).

### 1. Beispiel: Dekontamination einer Waschlauge

Eine mit radioaktiven Metallionen kontaminierte Waschlauge wird in dem Behälter 1 durch Entionisierung dekontaminiert. Eine mit radioaktiven Metallionen kontaminierte Waschlauge entsteht beispielsweise beim Waschen von in Atomkraftwerken getragenen oder verwendeten Kleidungsstücken.

Dabei wird die Waschlauge kontinuierlich von oben nach unten durch den vollständig mit Flüssigkeit gefüllten Behälter 1 geleitet. Als Ionenaustauscher dient partikuläres lonenaustauscherharz mit Sulfonsäuregruppen. Die radioaktiven Ionen, beispielsweise Cäsium, werden der Waschlauge durch Wechselwirkung mit den Sulfonsäuregruppen des Ionenaustauschers entzogen. Dieser wird durch Elektrolyse regeneriert, wobei auch Wasserstoff und Sauerstoff entstehen. Die bei der Regeneration vom Ionenaustauscher abgespalteten, radioaktiven Metallionen werden mit diesen Gasen aus der Lösung abgeführt. Die Gase werden getrennt voneinander gründlich abgesaugt und jeweils durch eine verglichen mit der Menge der entionisierten Waschlauge sehr geringe Menge an Waschlösung (Aufnahmeflüssigkeit) geleitet, welche geeignete Fällungs- und/oder Komplexierungsmittel wie Kronether oder EDTA aufweist. Diese Waschlösung kann auch für mehrere Waschgänge verwendet werden bis sie Ihren Sättigungspunkt erreicht und die Ionen aus dem Gas nicht mehr vollständig aufnehmen kann.

Das gereinigte Wasserstoffgas wird dann einer Brennstoffzelle zugeführt, welche die Energieversorgung der Elektrolysezelle zur Regeneration des lonenaustauscers unterstützt.

### 2. Beispiel: Dekontamination einer Salzlauge

Eine bei der Salzgewinnung entstehende Salzlauge wird wie in Beispiel 1 dargestellt entionisiert.

Nach einer Entsalzung nach dem erfindungsgemäßen Verfahren konnten reproduzierbar folgende Werte ermittelt werden:

| Ion | Menge [g/l] | Prüfverfahren |
|---|---|---|
| Kalium | 21,3 | DIN EN ISO 11885 |
| Natrium | 66,7 | DIN EN ISO 11885 |
| Magnesium | 33,2 | DIN EN ISO 11885 |
| Schwefel | 20,3 | DIN EN ISO 11885 |
| Chlorid | 175 | Titration nach Mohr |

Die Dichte betrug 1250g/l bei einer Temperatur von 11°C. Berechnete Werte beliefen sich auf:

| Stoff | Menge [g/l] |
|---|---|
| KCl | 40 |
| NaCl | 170 |
| MgSO₄ | 76 |
| MgCl₂ | 70 |

Diese Ergebnisse zeigen deutlich, dass mit Hilfe eines erfindungsgemäßen Verfahrens eine effiziente Entsalzung im kontinuierlichen Betrieb erzielt werden konnte, ohne dabei auf die ständige Parameterkontrolle während der Entsalzung/elektrolytischen Regeneration oder auf einen komplizierten Zellenaufbau von Methoden aus dem Stand der Technik angewiesen zu sein.

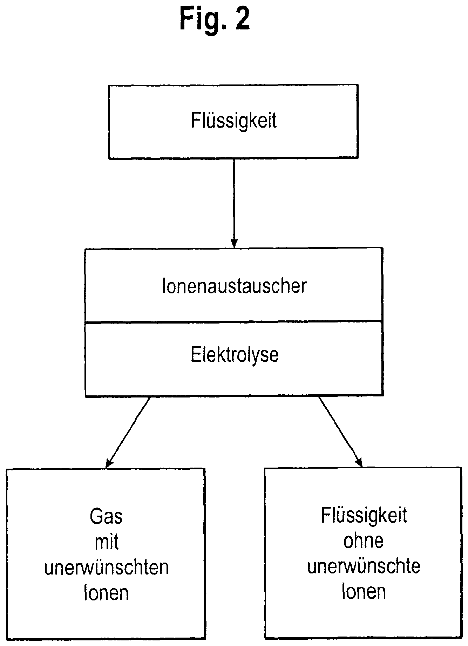

Figur 2 zeigt eine schematische Darstellung eines erfindungsgemäßen Verfahrens als Flußdiagramm. Eine Flüssigkeit wird über einen Ionenaustauscher geleitet und der Ionenaustauscher dabei mit den zu entfernenden Ionen beladen. Dabei entsteht eine entsalzte Flüssigkeit ohne unerwünschte Ionen.

Simultan wird der Ionenaustauscher elektrolytisch regeneriert, wobei Wasserstoffgas und Sauerstoffgas entstehen. Diese Gase entweichen aus der Reinigungs- bzw. Elektrolysekammer und treiben dabei die aus der Flüssigkeit entfernten, unerwünschten Ionen aus.

## Patentansprüche

1. Verfahren zum Entfernen von Ionen aus einer Flüssigkeit, bei dem
mindestens ein Ionenaustauscher in einer Beladungszone von der Flüssigkeit durchströmt wird, wobei der Ionenaustauscher mit Ionen beladen wird und der Flüssigkeit Ionen entzogen werden, und
der Ionenaustauscher in einer Regenerationszone elektrolytisch regeneriert wird, wobei die bei der Regeneration des Ionenaustauschers freiwerdenden Ionen mit den durch Elektrolyse der Flüssigkeit und/oder darin enthaltener Teilchen gebildeten Gasen abgeführt werden,
**dadurch gekennzeichnet,**
**dass** sich die Phasen der Beladung und der Regeneration des Ionenaustauschers zeitlich zumindest teilweise überschneiden und dass sich die Beladungszone und die Regenerationszone räumlich überschneiden oder einander entsprechen.

2. Verfahren nach Anspruch 1, **dadurch gekennzeichnet, dass** die Phasen der Beladung und der Regeneration des Ionenaustauschers zeitlich einander entsprechen.

3. Verfahren nach einem der vorhergehenden Ansprüche, wobei zum Abtransport der bei der Regeneration des Ionenaustauschers freiwerdenden Ionen aus der Regenerations- und/oder Beladungszone keine Spülflüssigkeit verwendet wird und/oder wobei die bei der Regeneration des Ionenaustauschers freiwerdenden Ionen bei deren Abtransport aus der Regenerations- und/oder Beladungszone keine ionendurchlässige Trennwand durchdringen.

4. Verfahren nach einem der vorhergehenden Ansprüche, wobei es sich bei der zu dekontaminierenden Flüssigkeit um Wasser handelt und die bei der Regeneration des Ionenaustauschers freiwerdenden Kationen und/oder Anionen mit dem entstehenden Sauerstoff und/oder Wasserstoff abgeführt werden.

5. Verfahren nach einem der vorhergehenden Ansprüche, wobei der Ionenaustauscher in der Beladungszone als partikuläres lonenaustauschermaterial vorliegt.

6. Verfahren nach Anspruch 5, **dadurch gekennzeichnet, dass** die Strömungsrichtung der Flüssigkeit so gewählt ist, dass das partikuläre lonenaustauschermaterial während der Durchströmung um zumindest Teile der zur elektrolytischen Regeneration verwendeten Elektroden gepackt wird.

7. Verfahren nach einem der vorhergehenden Ansprüche, wobei die abgeführten Ionen aus den bei der Elektrolyse entstehenden Gasen entfernt werden.

8. Verfahren nach Anspruch 7, **dadurch gekennzeichnet, dass** die abgeführten Ionen aus den bei der Elektrolyse entstehenden Gasen durch das Durchströmen einer Aufnahmeflüssigkeit entfernt werden.

9. Verfahren nach einem der vorhergehenden Ansprüche, wobei die bei der Elektrolyse eingesetzte Energie zumindest teilweise durch Verwertung der bei der Elektrolyse entstehenden Gase gewonnen wird.

10. Verfahren nach Anspruch 9, **dadurch gekennzeichnet, dass** die bei der Elektrolyse gewonnene Energie durch Verwendung des entstehenden Wasserstoffgases in einer Brennstoffzelle gewonnen wird.

## Claims

1. A method for removing ions from a liquid, in which
at least one ion exchanger is traversed by the liquid in a loading zone, wherein the ion exchanger is loaded with ions and ions are removed from the liquid, and
the ion exchanger is electrolytically regenerated in a regeneration zone, wherein the ions released during the regeneration of the ion exchanger are discharged with the gases formed by electrolysis of the liquid and/or particles contained therein,
**characterized in**
**that** the phases of loading and regenerating the ion exchanger at least partly overlap each other temporally and that the loading zone and the regeneration zone spatially overlap each other or correspond to each other.

2. The method according to claim 1, **characterized in that** the phases of loading and regenerating the ion exchanger temporally correspond to each other.

3. The method according to any of the preceding claims, wherein for the removal of the ions released during the regeneration of the ion exchanger from the regeneration and/or loading zone no rinsing liquid is used and/or wherein the ions released during the regeneration of the ion exchanger do not penetrate an ion-permeable dividing wall during their removal from the regeneration and/or loading zone.

4. The method according to any of the preceding claims, wherein the liquid to be decontaminated is water and the cations and/or anions released during the regeneration of the ion exchanger are discharged with the oxygen and/or hydrogen produced.

5. The method according to any of the preceding claims, wherein the ion exchanger is present in the loading zone as a particulate ion exchanger material.

6. The method according to claim 5, **characterized in that** the flow direction of the liquid is chosen such that during the throughflow the particulate ion exchanger material is packed around at least parts of the electrodes used for the electrolytic regeneration.

7. The method according to any of the preceding claims, wherein the discharged ions are removed from the gases produced during the electrolysis.

8. The method according to claim 7, **characterized in that** the discharged ions are removed from the gases produced during the electrolysis by flowing through a trapping liquid.

9. The method according to any of the preceding claims, wherein the energy used during the electrolysis is at least partly generated by utilization of the gases produced during the electrolysis.

10. The method according to claim 9, **characterized in that** the energy obtained during the electrolysis is obtained by using the generated hydrogen gas in a fuel cell.

## Revendications

1. Procédé pour éliminer des ions d'un liquide, dans lequel
au mois un échangeur d'ions est traversé par le liquide dans une zone de chargement, l'échangeur d'ions étant chargé avec des ions et des ions étant éliminés du liquide, et
l'échangeur d'ions est électrolytiquement régénéré dans une zone de régénération, les ions libérés lors de la régénération de l'échangeur d'ions étant évacués avec les gaz formés par l'électrolyse du liquide et/ou des particules qu'il contient,
**caractérisé en ce que**
les phases du chargement and de la régénération de l'échangeur d'ions se chevauchent temporellement au moins partiellement et que la zone de chargement et la zone de régénération se chevauchent spatialement ou correspondent l'une à l'autre.

2. Procédé selon la revendication 1, **caractérisé en ce que** les phases du chargement et de la régénération de l'échangeur d'ions correspondent l'une à l'autre temporellement.

3. Procédé selon l'une quelconque des revendications précédentes, dans lequel pour l'évacuation des ions libérés lors de la régénération de l'échangeur d'ions de la zone de régénération et/ou de chargement aucun liquide de rinçage est utilisé et/ou dans lequel les ions libérés lors de la régénération de l'échangeur d'ions ne pénètrent pas un mur de séparation perméable aux ions lors de leur évacuation de la zone de régénération et/ou de chargement.

4. Procédé selon l'une quelconque des revendications précédentes, dans lequel le liquide à décontaminer est de l'eau et les cations et/ou anions libérés lors de la régénération de l'échangeur d'ions sont évacués avec l'oxygène et/ou l'hydrogène produit.

5. Procédé selon l'une quelconque des revendications précédentes, dans lequel l'échangeur d'ions est présent dans la zone de chargement sous forme de matériau échangeur d'ions particulaire.

6. Procédé selon la revendication 5, **caractérisé en ce que** la direction du flux du liquide est choisie de telle sorte que lors du passage le matériau échangeur d'ions particulaire est mis autour au moins des parties des électrodes utilisées pour la régénération électrolytique.

7. Procédé selon l'une quelconque des revendications précédentes, dans lequel les ions évacués sont éliminés des gaz produits lors de l'électrolyse.

8. Procédé selon la revendication 7, **caractérisé en ce que** les ions évacués sont éliminés des gaz produits lors de l'électrolyse en traversant un liquide de captage.

9. Procédé selon l'une quelconque des revendications précédentes, dans lequel l'énergie utilisée lors de l'électrolyse est produite au moins partiellement par l'exploitation des gaz produits lors de l'électrolyse.

10. Procédé selon la revendication 9, **caractérisé en ce que** l'énergie produite lors de l'électrolyse est obtenue en utilisant l'hydrogène gazeux produit dans une pile à combustible.
